# EUROPÄISCHE PATENTSCHRIFT

(11) **EP 1 448 971 B1**
(45) Veröffentlichungstag und Bekanntmachung des Hinweises auf die Patenterteilung: **14.12.2005**
(21) Anmeldenummer: 02754948.4
(22) Anmeldetag: 27.07.2002
(51) Int. Cl.: G01M 3/26, F15B 19/00

(54) **VERFAHREN ZUR FUNKTIONSÜBERWACHUNG VON DRUCKMITTELLEITUNGEN SOWIE ZUGEHÖRIGE EINRICHTUNG**
METHOD FOR MONITORING THE FUNCTION OF PRESSURE MEDIUM LINES AND CORRESPONDING DEVICE
PROCEDE DE CONTROLE DU FONCTIONNEMENT DE CONDUITES POUR FLUIDES, ET DISPOSITIF CORRESPONDANT

(30) Priorität: 07.08.2001 DE 10138777
(43) Veröffentlichungstag der Anmeldung: 25.08.2004
(73) Patentinhaber: Kunze, Silvia, 46286 Dorsten (DE); Francus, Josip, 47441 Moers (DE)
(72) Erfinder: KUNZE, Hans-Jürgen, 46286 Dorsten (DE)
(74) Vertreter: Nunnenkamp, Jörg
(86) Internationale Anmeldenummer: PCT/EP2002/008385
(87) Internationale Veröffentlichungsnummer: WO 2003/016851

(56) Entgegenhaltungen:
- EP-B- 0 426 803
- WO-A-02/14825
- DE-A- 3 302 236
- DE-A- 4 445 101
- DE-C- 4 410 234
- US-B1- 6 182 501

## Beschreibung

Die Erfindung betrifft ein Verfahren zur Funktionsüberwachung von Zuleitungen für mit einem druckbeaufschlagten Medium betriebene Aggregate, insbesondere zur Leckageüberwachung von Druckleitungen.

Durch die DE 44 10 234 C1 ist ein Verfahren zur Prüfung der Dichtigkeit von Abgasmessgeräten und daran angeschlossenen Messsonden bekannt geworden. Dabei wird vor der Erstinbetriebnahme des zugehörigen Abgasmessgerätes das Unterdruck-Zeitverhalten ohne Messsonde bestimmt. Die erhaltenen Werte werden in einem nichtflüchtigen Speicher des Abgasmessgerätes abgelegt. In Abhängigkeit dieses Unterdruck-Zeitverhaltens wird ein Grenzwertbereich fest vorgegeben, welcher das Zusatzvolumen der Messsonde berücksichtigt. Ein Fehler wird angezeigt, wenn die Dichtigkeitsprüfung ein Unterdruck-Zeitverhalten ergibt, das außerhalb des Grenzwertbereiches liegt. Eine zeitunabhängige Prüfung im Sinne eines Soll/Istwertvergleiches findet nicht statt.

Durch die DE 44 45 101 A1 ist ein Verfahren zur Kontrolle der Dichtheit eines konstanten Volumen in Rohrleitungen bekannt geworden. Dabei kommt ein druckabhängiger Messwertaufnehmer zum Einsatz, welcher an das Volumen gasseitig angeschlossen ist. Eine Leckage wird anhand der Druckänderung im Volumen nach dessen Abschluss ermittelt. Zu diesem Zweck wird der Druckverlauf im Volumen über eine bestimmte Zeit zunächst in einer Kontrollmessung bei normalen Betriebsbedingungen gemessen und protokolliert. Anschließend wird ein Prüfdruck im Volumen eingestellt und der Druckverlauf über einen bestimmten Zeitraum gemessen und protokolliert. Durch eine Korrektur der Kurve des Prüfdruckes durch eine Differenzbildung mit der Kurve der Kontrollmessung lässt sich eine wirksame Druckkurve ermitteln. Dadurch kann eine Leckagemenge für einen bestimmten Zeitraum berechnet werden.

Ein Verfahren zur Funktionsüberwachung von Zuleitungen für mit einem druckbeaufschlagten Medium betriebene Aggregate wird darüber hinaus in der EP 0 426 803 B1 beschrieben. Hier findet ein Vergleich zwischen Ist-Restdruck und Soll-Restdruck in einer Leitung für ein hydraulisches Maschinenaggregat statt. Dabei wird der Druckvergleich lediglich bei anstehendem Vorspanndruck, also im Leerlauf einer zugehörigen Pumpe, vorgenommen. Letztlich geht es im Kern darum, die Unterschreitung eines fixen Wertes (Soll-Wert) festzustellen.

Die bekannte Vorgehensweise hat sich grundsätzlich bewährt, ist jedoch insofern verbesserungsfähig, als Leckagen bei anliegendem Betriebsdruck nicht erfasst werden. Wenn also eine zugehörige Maschine oder ein anderes Aggregat während seines (langandauernden) Betriebes durch ein Leck in der Druckleitung in seiner Funktion beeinträchtigt wird, so ist die vorbekannte Lehre nicht in der Lage, derartige Störungen feststellen zu können. - Hier setzt die Erfindung ein.

Der Erfindung liegt das technische Problem zu Grunde, ein derartiges Verfahren so weiterzubilden, dass eine umfassende Funktionsüberwachung gewährleistet ist, die insbesondere eine Leckageüberwachung sowohl bei Vorspanndruck als auch bei Betriebsdruck zur Verfügung stellt. Außerdem soll eine entsprechend ausgerüstete Funktionsüberwachungseinrichtung angegeben werden.

Zur Lösung dieser Aufgabe ist Gegenstand der Erfindung ein Verfahren zur Funktionsüberwachung von Zuleitungen für mit einem druckbeaufschlagten Medium betriebene Aggregate, insbesondere zur Leckageüberwachung von Druckleitungen, mit jeweils zwei Messwertaufnehmern im Zulauf und zwei Messwertaufnehmern im Ablauf der Druckleitung zum Aggregat hin bzw. vom Aggregat weg mit zugehörigen zwei Anschlüssen und mit einer Auswerteeinrichtung, wobei
- die beiden Messwertaufnehmer für unterschiedliche Druckbereiche ausgelegt sind, und zwar als Vorspanndruck-Messwertaufnehmer zur Erfassung eines Vorspanndruckes und als Betriebsdruck-Messwertaufnehmer zur Aufnahme eines Betriebsdruckes ausgebildet sind,
- im Betrieb des Aggregates der jeweilige Messwertaufnehmer den in der Druckleitung herrschenden Betriebsdruck des Mediums zeitabhängig erfasst und an die Auswerteeinrichtung übergibt,
- die Auswerteeinrichtung diesen Ist-Druckverlauf mit einem dort abgelegten Referenz-Druckverlauf als Soll-Druckverlauf auf Abweichungen dahingehend überprüft, ob diese eine vorgegebene Varianz überschreiten, und wobei
- zusätzlich in Arbeitspausen des Aggregates der Vorspanndruck ermittelt wird und eine zeitunabhängige Prüfung im Sinne eines Soll-/Istwertvergleiches erfährt.

Anders ausgedrückt, werden im Gegensatz zum Stand der Technik nicht zwei fixe Werte (Soll-Wert und Ist-Wert) verglichen, sondern vielmehr komplexe, zeitabhängige Druckverläufe einer Untersuchung unterzogen.

Hierbei geht der Anmeldungsgegenstand von der Erkenntnis aus, dass der Betriebsdruck je nach angeschlossenem und betriebenen Aggregat während eines Arbeitszyklus einen ganz bestimmten zeitabhängigen charakteristischen Verlauf aufweist. Dieser wird zumeist im jungfräulichen Zustand als Referenz-Druckverlauf in der Auswerteeinrichtung abgespeichert. Es ist aber auch möglich, andere zeitabhängige Erst-Druckverläufe als Referenz-Druckverlauf zu definieren, beispielsweise jeden Monat oder jede Woche aufs Neue, nach einer Maschinenüberholung usw.. Daneben schlägt die Erfindung alternativ oder ergänzend eine Mittelung verschiedener Ist-Druckverläufe aus der Vergangenheit vor, die aufsummiert und arithmetisch gemittelt den gewünschten Referenz-Druckverlauf ergeben. Selbstverständlich lässt sich dieser gemittelte Referenz-Druckverlauf - falls gewünscht - auch mit dem (jungfräulichen) Erst-Druckverlauf kombinieren (mitteln).

So oder so ist von besonderer Bedeutung, dass eben nicht zwei fixe Werte einander gegenübergestellt werden, sondern die beschriebenen zeitabhängigen Druckverläufe. Im Falle einer Leckage ist davon auszugehen, dass der Ist-Druckverlauf von seiner typischen Charakteristik her mehr oder minder gleichbleibend ausgebildet ist, wohingegen das insgesamt erreichte Druckniveau gegenüber dem Referenz-Druckverlauf sinkt. Das gilt zumindest für kleine Lecks. Bei größeren Leckagen stellt sich dagegen ein Ist-Druckverlauf ein, welcher eingeebnete Druckspitzen aufweist und im Extremfall exponentiell abfällt. In jedem Fall führt ein Vergleich zwischen dem Ist-Druckverlauf und dem Soll-Druckverlauf Punkt für Punkt im Sinne einer Differenzbildung auf einen zeitabhängigen Differenzdruckverlauf. Dieser lässt sich mit der vorgegebenen Varianz vergleichen.

Dabei kann auch die Varianz als zeitabhängiger Grenzwertbetrag definiert sein, d. h. die Varianz nimmt über die Zeit bestimmte - nicht konstante - Funktionswerte ein. Üblicherweise kommt als Varianz jedoch ein zeitunabhängiger Grenzwertbetrag in Frage, welcher gleichsam einen Korridor für den zulässigen Differenzdruckverlauf darstellt.

In der Regel wird der Betriebsdruck zeitabhängig erfasst, während zusätzlich in Arbeitspausen des Aggregates, beim Leerlauf einer zugehörigen Pumpe, der Vorspanndruck ermittelt wird. Hierdurch können praktisch sämtliche Betriebszustände der Druckleitung überwacht werden. Dabei wird der Betriebsdruck dem beschriebenen zeitabhängigen Vergleich zwischen Ist-Druckverlauf und Soll-Druckverlauf unterzogen, während der Vorspanndruck eine zeitunabhängige Prüfung im Sinne eines Soll-/Istwertvergleiches erfährt. Anders ausgedrückt, erfolgt (nur) die Leckageprüfung des Vorspanndruckes im Kern so, wie dies in der EP 0 426 803 B1 beschrieben ist. D. h. vorgegebener Soll-Wert und erfasster Istwert des Vorspanndruckes bilden lediglich zwei konstante Werte, die miteinander zu vergleichen sind.

Von besonderer Bedeutung für den vorliegenden Erfindungsgegenstand ist ferner die Tatsache, dass zusätzlich zu dem Druck weitere Parameter überwacht und in der Auswerteeinrichtung verarbeitet werden. Bei diesen Parametern mag es sich um die Temperatur des Mediums, seinen Durchfluss, die Art und Konzentration des Mediums, Vibrationen der Druckleitung etc. handeln. Auf diese Weise wird das beschriebene Verfahren in die Lage versetzt, eine gleichsam universelle Funktionsüberwachung der Druckleitung und auch des angeschlossenen Aggregates übernehmen zu können.

So lässt die Temperatur des in der Druckleitung geführten Mediums eindeutige Rückschlüsse auf eine einwandfreie Funktion der den Druck erzeugenden Pumpe sowie des hiermit beaufschlagten Aggregates und auch der Druckleitung zu. Tatsächlich korrespondiert nämlich ein Defekt an der Pumpe üblicherweise zu einer erhöhten Temperatur, die sich über das Medium bis zu einem entsprechenden Temperatursensor in der zugehörigen Funktionsüberwachungseinrichtung fortpflanzt. Ebenso treten Temperaturänderungen dann auf, wenn ein (großes) Leck zu verzeichnen ist oder das druckangetriebene Aggregat Verschleiß- oder Ausfallerscheinungen zeigt.

Ferner kann ein Leck zu Vibrationen in der Druckleitung führen. Denn die in der Druckleitung üblicherweise fließende Flüssigkeit wird sehr schnell bewegt, so dass ihr statischer Druck soweit absinken mag, dass sich im Innern mit Dampf gefüllte Hohlräume bilden. Fällt jetzt die Geschwindigkeit infolge eines Lecks ab, so implodieren die Dampfblasen mit großer Gewalt, wobei Stoßwellen entstehen, die Materialschäden hervorrufen können. Dieser als Kavitation bezeichnete Effekt lässt sich mittels eines Vibrationssensors erfassen, der auf die Stoßwellen reagiert. Hierbei handelt es sich zumeist um einen Beschleunigungssensor. Dieser ist auch in der Lage, Defekte des angeschlossenen Aggregates aufnehmen und auswerten zu können. Denn diese resultieren zumeist in einem unrunden Lauf, welcher erfasst und umgesetzt werden kann.

Sämtliche aufgenommenen Parameter, d. h. Druck(verlauf) und Temperatur des Mediums, eventuell sein Durchfluss, Art und Konzentration des Mediums, Vibrationen der Druckleitung usw. lassen sich im Sinne einer Prozessvisualisierung in bewegte Grafiken, Balkendiagramme, Anzeigen etc. umwandeln. Das gilt auch für aus den erfassten Parametern abgeleitete Größen. Ein Beispiel hierfür ist eine hin- und herbewegte Antriebsstange eines Aggregates, welche dem zu- und abfließenden Medium folgt. Solange eingangsseitig des Aggregates Druck aufgebaut und ausgangsseitig ein entsprechender Abfluss registriert wird, ist davon auszugehen, dass sich ein entsprechender Stellkolben bewegt. Gleiches gilt für die Rückwärtsbewegung. D. h. die vorgenannten Parameter lassen sich zusätzlich so umsetzen, dass hieraus ein sich in bestimmter Richtung bewegender Stellkolben im Stellzylinder abgeleitet wird.

Schließlich schlägt die Erfindung vor, sämtliche oder nur ausgewählte Parameter zeitabhängig zu protokollieren. Dies deshalb, um eventuelle Schäden nachträglich dokumentieren zu können oder hieraus belastungsabhängige Wartungen herzuleiten. Selbstverständlich können solche Protokolle auch ausgedruckt oder sonst wie gespeichert werden.

Gegenstand der Erfindung ist auch eine Funktionsüberwachungseinrichtung, wie sie im Rahmen des Patentanspruches 8 beschrieben wird. Vorteilhafte Ausgestaltungen dieser Funktionsüberwachungseinrichtung finden sich in den Patentansprüchen 9 bis 12.

Im Ergebnis werden ein Verfahren zur Funktionsüberwachung und eine zugehörige Funktionsüberwachungseinrichtung zur Verfügung gestellt, die zunächst einmal in der Lage sind, Leckagen einer Druckleitung in jedem möglichen Betriebszustand des mit dem druckbeaufschlagten Medium betriebenen Aggregates feststellen und auswerten zu können. Von besonderer Bedeutung ist dabei die Tatsache, dass als unter Druck stehendes Medium grundsätzlich jeder fließfähige Stoff Verwendung finden kann. Das gilt insbesondere für Hydrauliköl, Kühlflüssigkeit, Wasser aber auch Pressluft, Gase etc. Bei den Aggregaten mag es sich um Hydraulikkomponenten, wie z. B. Baggerantriebe oder untertägige Bergbaumaschinen, etc. handeln. Grundsätzlich können die mit dem druckbeaufschlagten Medium betriebenen Aggregate auch chemische Prozesskolonnen umfassen, die für ihre darin ablaufenden Reaktionen mit dem entsprechenden Medium versorgt werden.

Immer ist gewährleistet, dass die Druckleitung eine durchgängige Überwachung erfährt, die insbesondere nicht auf einen bestimmten Leerlaufzustand beschränkt ist, wie dies im Rahmen der EP 0 426 803 B1 gefordert wird. Vielmehr eröffnet der beschriebene Vergleich der Druckverläufe eine aggregate- und betriebsunabhängige Prüfung auf Leckagen, die bisher nicht für möglich gehalten wurde.

Hinzu kommt, dass weitere Parameter in das Überwachungsprofil mit einbezogen werden können. Diese ertüchtigen die zugehörige Funktionsüberwachungseinrichtung soweit, dass beispielsweise auch eine den Druck in der Druckleitung erzeugende Pumpe und das von dem druckbeaufschlagten Medium angetriebene Aggregat hinsichtlich ihrer Funktionssicherheit überwacht werden. Auftretende Störungen lassen sich also frühzeitig erkennen. Dabei sorgt eine an die Auswerteeinrichtung angeschlossene Alarmvorrichtung oder Anzeigeeinrichtung für die Ausgabe entsprechender Warnmeldungen, und zwar optisch und/oder akustisch. Das alles gelingt größtenteils unabhängig vom jeweiligen Einsatzgebiet, wobei letztlich "nur" Anpassungen hinsichtlich der eingesetzten Messwertaufnehmer sowie gegebenenfalls der zugelassenen Varianz beim Betriebsdruck und/oder der zugelassenen Abweichung vom Soll-Wert beim Vorspanndruck erforderlich sind. Hierin sind die wesentlichen Vorteile zu sehen.

Im Folgenden wird die Erfindung anhand lediglich ein Ausführungsbeispiel darstellender Zeichnungen näher erläutert; es zeigen:
- Fig. 1: einen zeitabhängigen Druckverlauf für den Ist-Druck (P_{I}) (t) sowie den Soll-Druck (P_{S}) (t) schematisch,
- Fig. 2: den daraus resultierenden Differenzdruck ΔP (t), wie er in der Auswerteeinrichtung ermittelt wird, und zwar zusammen mit der zulässigen Varianz (+P_{V} bzw. -P_{V}),
- Fig. 3 a) bis 3c): die Funktionsüberwachungseinrichtung in Kombination mit einem angeschlossenen Aggregat schematisch und
- Fig. 4: einen zugehörigen Hydraulikschaltplan.

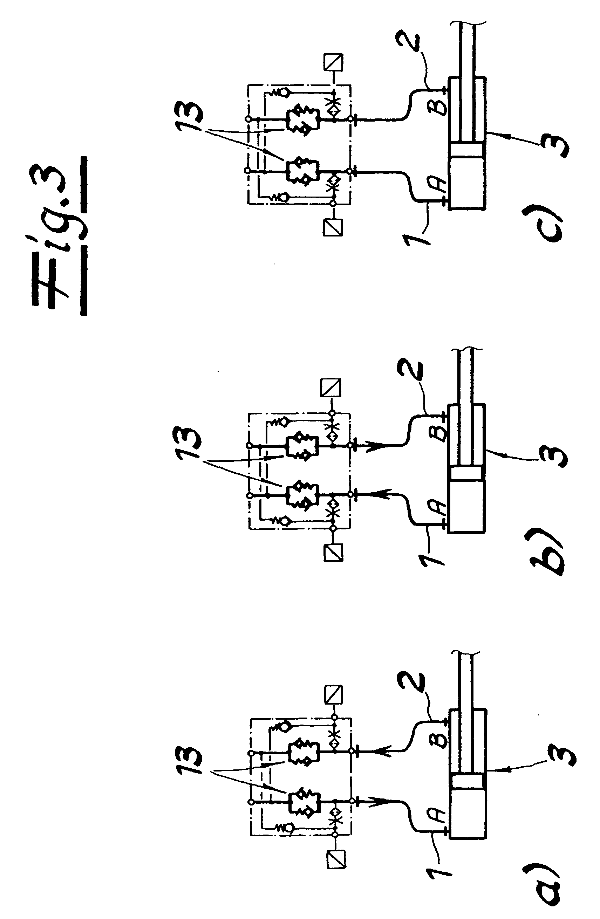

In den Figuren ist eine Funktionsüberwachungseinrichtung für Zuleitungen 1, 2 bzw. Zuleitung 1 und Ableitung 2 von mit einem druckbeaufschlagten Medium betriebenen Aggregaten 3 dargestellt. Bei den Leitungen 1, 2 handelt es sich um Druckleitungen 1, 2. Die Funktionsüberwachungseinrichtung verfügt über insgesamt vier Messwertaufnehmer 4, 5, die jeweils als Drucksensoren 4, 5 ausgebildet sind. Je zwei Messwertaufnehmer 4, 5 finden sich an einem separaten Anschluss A, B. In der Fig. 3 ist je Anschluss A, B jedoch nur ein Messwertaufnehmer dargestellt.

Dabei ist der eine Messwertaufnehmer 4 als Vorspanndruck-Messwertaufnehmer 4 ausgeführt, während der andere Messwertaufnehmer 5 als Betriebsdruck-Messwertaufnehmer 5 arbeitet. Folgerichtig nimmt der Vorspanndruck-Messwertaufnehmer 4 den Vorspanndruck auf, während der Betriebsdruck-Messwertaufnehmer 5 zur Erfassung des Betriebsdruckes eingerichtet ist. Dadurch erklären sich auch die unterschiedlichen Messbereiche, die im ersten Fall den Bereich zwischen 1 und 6 bar umfassen, während der letztgenannte Messwertaufnehmer 5 für Drücke zwischen 0 und 250 bar ausgelegt ist.

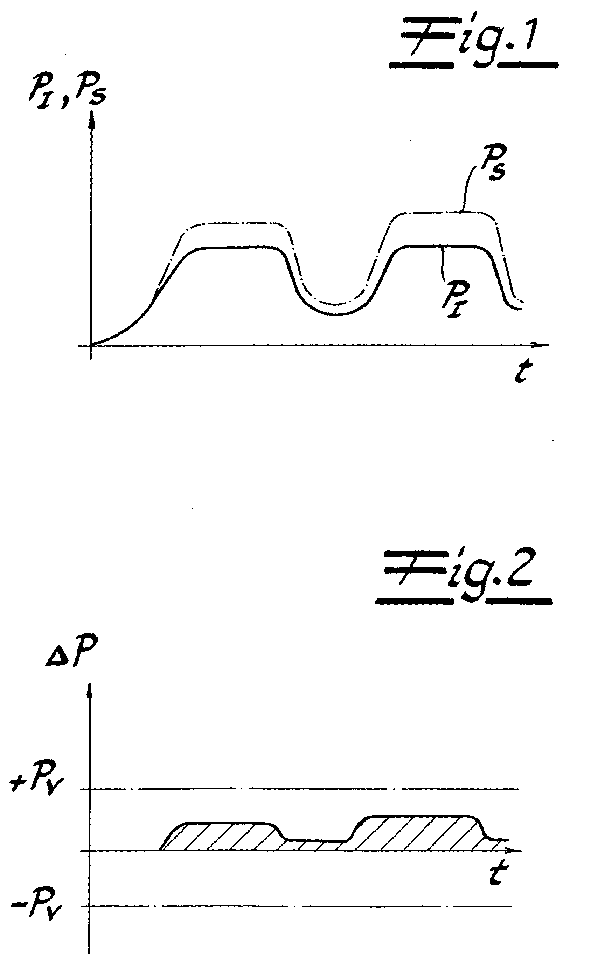

Zum grundsätzlichen Aufbau gehört zusätzlich noch eine Auswerteeinrichtung 6, die die von den Messwertaufnehmern 4, 5 gelieferten Messwerte aufnimmt, verarbeitet sowie gegebenenfalls speichert. Die Auswerteeinrichtung 6 verfügt über ein Zeitglied 7, um zeitabhängige Druckverläufe darstellen zu können. Zusätzlich ist ein Differenzglied 8 integriert, welches den ermittelten Ist-Druckverlauf entsprechend dem Druck P_{I} (t) nach der Fig. 1 in Relation zum Soll-Druckverlauf gemäß P_{S} (t) setzt (vgl. Fig. 1 und 2). Bei der Auswerteeinrichtung 6 handelt es sich um eine SPS-(speicherprogrammierbare) Steuerung. Diese nimmt die entsprechenden Messwerte der Messwertaufnehmer 4, 5 zeitabhängig auf, und zwar getaktet von einem integrierten Taktgeber. Gleichzeitig werden die entsprechenden Druckverläufe mit einer Absolutzeit flankiert, die von einer Uhr, insbesondere Funkuhr, geliefert wird. Auf diese Weise lassen sich Druckverläufe protokollieren.

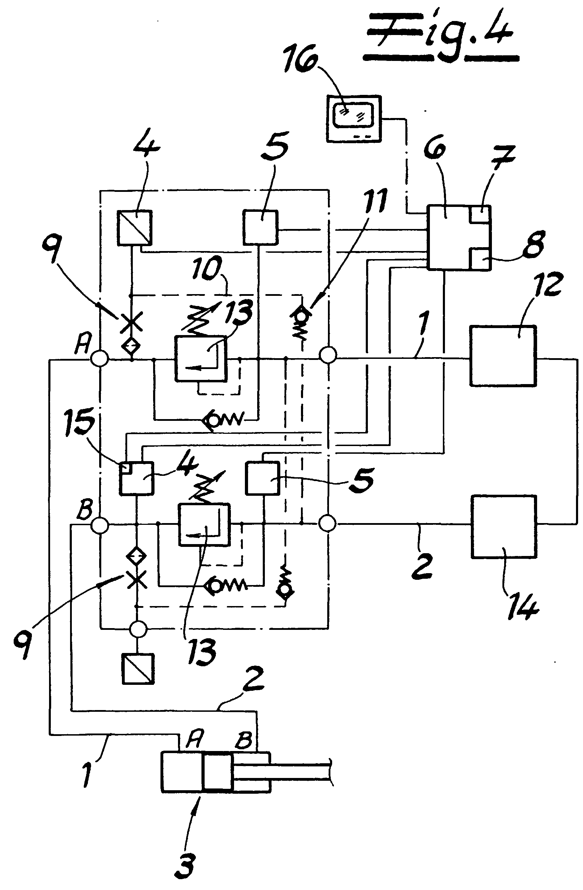

Man erkennt anhand der Fig. 4, dass jeweils zwei Messwertaufnehmer 4, 5 je Anschluss A bzw. B vorgesehen sind. Dabei findet sich der Anschluss A im Zulauf 1 bzw. in der Zuleitung zu einem nur schematisch angedeuteten Aggregat 3, während der Anschluss B den Ablauf 2 bzw. die Ableitung vom Aggregat 3 überwacht.

Damit der am Vorspanndruck-Messwertaufnehmer 4 anstehende Druck bestimmte Höchstwerte (vorliegend ca. 6 bar) nicht überschreitet, ist eine dem Vorspanndruck-Messwertaufnehmer 4 vorgeschaltete Blende 9 zur Druckreduzierung vorgesehen. In Fließrichtung hinter der Blende 9 schließt sich ein Abzweig mit einem Bypass 10 sowie darin befindlichem Rückschlagventil 11 an. Auf diese Weise gelangt das unter Druck stehende Medium von einer angedeuteten Pumpe 12 über die Zuleitung 1 zu der eigentlichen Funktionsüberwachungseinrichtung, die strichpunktiert angedeutet ist. Darauf folgend wird ein Halteventil 13 passiert, welches in der Nicht-Funktionsstellung des angeschlossenen Aggregates 3 geschlossen ist, so dass im gesamten System der Vorspanndruck anliegt und von dem Vorspanndruck-Messwertaufnehmer 4 erfasst werden kann.

Da die Zuleitungen 1, 2 bzw. das Aggregat 3 wechselweise beaufschlagt werden (vgl. Fig. 3a, 3b), müssen die Halteventile 13 - wie dargestellt - doppelt ausgeführt sein, d. h. in beiden Richtungen wirken. Folglich handelt es sich ausweislich der Fig. 3a bis 3c bei jedem Halteventil 13 um ein Paar entgegensetzt wirkender Rückschlagventile, die auf den vorbestimmten Druck eingestellt sind. D. h., nach Überschreiten des Vorspanndruckes, der üblicherweise bei ca. 3 bar liegt, öffnet das jeweilige Halteventil 13 und gibt zur Ansteuerung der Arbeitsfunktion des Aggregates 3 die zugeordnete Leitung 1, 2 frei. Die Blende 9 als Druckminderer sorgt dafür, dass der entsprechende Druck über das Rückschlagventil 11 zur Ableitung 2 gelangt und von hier aus das Medium in einen Tank 14 überführt wird, der seinerseits mit der Pumpe 12 im Sinne eines geschlossenen Kreislaufs verbunden ist. Das ist jedoch nicht zwingend.

Zusätzlich zu den (Druck-)Messwertaufnehmern 4, 5 lassen sich weitere Sensoren in die dargestellte Funktionsüberwachungseinrichtung integrieren. Hier empfiehlt die Erfindung den Rückgriff auf wenigstens einen Temperaturmesswertgeber bzw. Temperatursensor 15, welcher gleichsam in den (Druck-)Messwertaufnehmer 4 integriert ist.

Denn bei diesem Messwertaufnehmer 4 handelt es sich um einen temperaturkompensierten (Druck-)Messwertaufnehmer 4, d. h. einen solchen, der flankierend Temperaturmessungen an dem unter Druck stehenden Medium erlaubt. Jedenfalls können die hier ermittelten Werte zusätzlich von der Auswerteeinrichtung 6 aufgenommen und verarbeitet werden.

Ferner lässt sich ein nicht dargestellter Durchflussmesser realisieren. Das gilt auch für die Möglichkeit, das Medium mit Hilfe eines Analysesensors hinsichtlich seiner (Haupt)-Bestanteile charakterisieren zu können. Auch ist es denkbar, Konzentrationsangaben zu machen. Das empfiehlt sich besonderes dann, wenn in den Zuleitungen 1, 2 unter Druck stehende Gase transportiert werden. Denn so lassen sich im Falle einer Leckage Gefahrenpotentiale abschätzen, die zudem noch dadurch konkretisiert werden, dass mit Hilfe des Durchflussmessers auch Angaben über die ausgetretenen Gasvolumina getätigt werden können. In diesem Fall kommt als Analyse-/Konzentrationssensor zumeist ein Gassensor zum Einsatz, der selbständig kalibrierend ausgebildet ist.

Anhand der Durchflussmessung, welche vorzugsweise beidseitig des Aggregates 3 vorgenommen wird, kann zudem die einwandfreie Arbeit des Aggregates 3 überwacht und visualisiert werden. Schließlich schlägt die Erfindung vor, in die Funktionsüberwachungseinrichtung einen Beschleunigungssensor zu integrieren, welcher Druckstöße (in Folge Kavitation) innerhalb des Mediums ebenso registriert wie gegebenenfalls anormale Vibrationen des angeschlossenen Aggregates 3, die sich über die Zuleitungen 1, 2 per Körperschall bis hin zu der betreffenden Einrichtung (Beschleunigungssensor) fortpflanzen.

Das gelingt besonders vorteilhaft dadurch, dass alle vorgenannten Bestandteile 4, 5 9, 10, 11, 13, 15 in ein blockartiges Gehäuse integriert sind, dessen Begrenzung die strichpunktiert in der Fig. 4 dargestellte Linie darstellt. Dieses Gehäuse trägt also außen- oder innenseitig die Druck-Messwertaufnehmer 4, 5 sowie die Halteventile 13. Auch die Blende 9, das Rückschlagventil 11 und der Bypass 10 sind integriert. Das gilt auch für die übrigen Sensoren, insbesondere den Temperatursensor 15. Es werden lediglich Zuleitungen zur Auswerteeinrichtung 6 hinausgeführt, die üblicherweise in einem Stecker zusammengefasst sind. Ferner versteht es sich, dass das blockartige Gehäuse mit Aufnahmebohrungen zum Anschluss der Zuleitungen 1, 2 sowie Herausführung dieser Leitungen 1, 2 zum Aggregat 3 ausgerüstet ist.

Die Auswerteeinrichtung 6 verfügt über einen lediglich angedeuteten Bildschirm 16, welcher mit der Auswerteeinrichtung 6 über eine beliebige (strichpunktiert dargestellte) Verbindung in Kontakt steht. Hierbei kann es sich um eine drahtlose oder auch drahtgebundene Verbindung, beispielsweie über eine Telefonleitung, das Internet etc. handeln. Dabei ist es denkbar, dass der Bildschirm 16 bzw. jedwede andere Anzeigevorrichtung 16 (also auch ein Drucker) Bestandteil eines externen (Warn-)gerätes ist.

Anders ausgedrückt, lassen sich die verschiedenen aufgenommenen Parameter mit Hilfe des Bildschirms bzw. der Anzeigevorrichtung 16 visualisieren, und zwar an praktisch beliebiger Stelle weltweit mit Hilfe eines die Anzeigevorrichtung 16 aufweisenden Rechners, eines Telefons oder eines vergleichbaren Gerätes. Die Datenübertragung erfolgt zumeist verschlüsselt per Internet oder auch drahtlos auf ein Handy per SMS (Short Message Substricpt). Das sind jedoch nur Beispiele.

## Patentansprüche

1. Verfahren zur Funktionsüberwachung von Zuleitungen (1, 2) für mit einem druckbeaufschlagten Medium betriebene Aggregate (3), insbesondere zur Leckageüberwachung von Druckleitungen (1, 2), mit jeweils zwei Messwertaufnehmern (4, 5) im Zulauf (1) und zwei Messwertaufnehmern (4, 5) im Ablauf (2) der Druckleitung (1, 2) zum Aggregat (3) hin bzw. vom Aggregat (3) weg mit zugehörigen zwei Anschlüssen (A, B), und mit einer Auswerteeinrichtung (6), wobei
- die beiden Messwertaufnehmer (4, 5) für unterschiedliche Druckbereiche ausgelegt sind, und zwar als Vorspanndruck-Messwertaufnehmer (4) zur Erfassung eines Vorspanndruckes und als Betriebsdruck-Messwertaufnehmer (5) zur Aufnahme eines Betriebsdruckes ausgebildet sind,
- im Betrieb des Aggregates (3) der jeweilige Messwertaufnehmer (4, 5) den in der Druckleitung (1, 2) herrschenden Betriebsdruck des Mediums zeitabhängig erfasst und an die Auswerteeinrichtung (6) übergibt,
- die Auswerteeinrichtung (6) diesen Ist-Druckverlauf (P_{I}(t)) mit einem dort abgelegten Referenz-Druckverlauf (P_{S}(t)) als Soll-Druckverlauf auf Abweichungen dahingehend überprüft, ob diese eine vorgegebene Varianz (±P_{V}) überschreiten, und wobei
- zusätzlich in Arbeitspausen des Aggregates (3) der Vorspanndruck ermittelt wird und eine zeitunabhängige Prüfung im Sinne eines Soll-/Istwertvergleiches erfährt.

2. Verfahren nach Anspruch 1, **dadurch gekennzeichnet, dass** der Ist-Druckverlauf (P_{I}(t)) mit dem Soll-Druckverlauf (P_{S}(t)) Punkt für Punkt im Sinne einer Differenzbildung verglichen wird, so dass ein zeitabhängiger Differenzdruckverlauf ΔP (t) gebildet und mit der vorgegebenen Varianz (±P_{V}) verglichen wird.

3. Verfahren nach Anspruch 1 oder 2, **dadurch gekennzeichnet, dass** die Varianz (±P_{V}) einen zeitunabhängigen Grenzwertbetrag darstellt.

4. Verfahren nach einem der Ansprüche 1 bis 3, **dadurch gekennzeichnet, dass** der Referenz-Druckverlauf (P_{S}(t)) von einem zeitabhängigen Erst-Druckverlauf abgeleitet wird und/oder eine Mittelung verschiedener Ist-Druckverläufe (P_{I}(t)) aus der Vergangenheit darstellt.

5. Verfahren nach einem der Ansprüche 1 bis 4, **dadurch gekennzeichnet, dass** zusätzlich zu dem Druck (P_{I}(t), Pₛ(t)) weitere Parameter, wie z. B. Temperatur des Mediums, sein Durchfluss, Art und Konzentration des Mediums, Vibrationen der Druckleitung (1, 2) etc. überwacht und in der Auswerteeinrichtung (6) verarbeitet werden.

6. Verfahren nach einem der Ansprüche 1 bis 5, **dadurch gekennzeichnet, dass** sämtliche erfassten Parameter und daraus abgeleitete Größen im Sinne einer Prozessvisualisierung in bewegte Grafiken, Balkendiagramme, Anzeigen etc. umgewandelt werden.

7. Verfahren nach einem der Ansprüche 1 bis 6, **dadurch gekennzeichnet, dass** sämtliche oder ausgewählte Parameter zeitabhängig protokolliert werden.

8. Funktionsüberwachungseinrichtung für Zuleitungen (1, 2) von einem mit einem druckbeaufschlagten Medium betriebenen Aggregat, insbesondere für Druckleitungen (1, 2), zur Durchführung des Verfahrens nach einem der Ansprüche 1 bis 7, mit jeweils zwei Messwertaufnehmern (4, 5) im Zulauf (1) und zwei Messwertaufnehmern (4, 5) im Ablauf (2) der Druckleitung (1, 2) zum Aggregat (3) hin bzw. vom Aggregat (3) weg mit zugehörigen zwei Anschlüssen (A, B), und mit einer Auswerteeinrichtung (6) zur Verarbeitung von seitens des jeweiligen Messwertaufnehmers (4, 5) gelieferten Daten, wobei
- die beiden Messwertaufnehmer (4, 5) für unterschiedliche Druckbereiche ausgelegt sind, und zwar als Vorspanndruck-Messwertaufnehmer (4) zur Erfassung des Vorspanndruckes und als Betriebsdruck-Messwertaufnehmer (5) zur Aufnahme des Betriebsdruckes ausgebildet sind,
- die Auswerteeinrichtung (6) ein Zeitglied (7) zur Erfassung zeitabhängiger Druckverläufe (P_{I}(t), P_{S}(t)) aufweist,
- zusätzlich ein Differenzglied (8) vorgesehen ist, welches den ermittelten Ist-Druckverlauf (P_{I}(t)) in Relation zum Soll-Druckverlauf (P_{S}(t)) setzt, und wobei
- zumindest ein Halteventil (13) vorgesehen ist, welches bei einem Druck kleiner dem Vorspanndruck geschlossen ist und erst darüber öffnet.

9. Funktionsüberwachungseinrichtung nach. Anspruch 8, **dadurch gekennzeichnet, dass** dem Vorspanndruck-Messwertaufnehmer (4) eine Blende (9) zur Druckreduzierung vorgeschaltet ist.

10. Funktionsüberwachungseinrichtung nach Anspruch 8 oder 9, **dadurch gekennzeichnet, dass** das Halteventil (13) als Paar entgegengesetzt wirkender Rückschlagventile ausgeführt ist, die auf einen vorbestimmten Druck zum Öffnen eingestellt sind.

11. Funktionsüberwachungseinrichtung nach einem der Ansprüche 8 bis 10, **dadurch gekennzeichnet, dass** zusätzlich zu dem Messwertaufnehmer (4, 5) weitere Sensoren, zum Beispiel Temperatursensor (15), Durchflussmesser, Analyse/Konzentrationssensor, Beschleunigungssensor etc. vorgesehen sind.

12. Funktionsüberwachungseinrichtung nach einem der Ansprüche 8 bis 11, **dadurch gekennzeichnet, dass** alle Bestandteile (4, 5, 9, 10, 11, 13, 15) in ein blockartiges Gehäuse integriert sind.

## Claims

1. A method of monitoring the function of supply pipelines (1, 2) for units (3) powered by a pressurised medium, more particularly for the leakage monitoring of pressurised pipes (1, 2) with two measurement recorders (4, 5) in the inlet (1) and two measurement recorders (4, 5) in the outlet (2) of the pressurised pipe(1, 2) to and from the unit (3) respectively with two associated connections (A, B) and with an evaluation device (6), whereby
- the two measurement recorders (4, 5) are designed for different pressure ranges, namely as a starting pressure measurement recorder (4) for recording a starting pressure and an operating pressure measurement recorder (5) for measuring an operating pressure,
- during operation of the unit (3) the measurement recorder (4, 5) records the operating pressure of the medium as a function of time and forwards it to the evaluation device (6),
- the evaluation device (6) checks this actual course of pressure (Pr(t)) with the stored reference course of pressure (Ps(t)) as the nominal course of pressure for deviations and whether these exceed a predefined variance value (± Pv), and whereby
- the starting pressure is also determined during operational pauses of the unit (3) and is checked in a time-independent manner in the sense of an actual/nominal value comparison

2. The method according to claim 1, **characterised in that** the actual course of pressure (Pr(t)) is compared point for point with the nominal course of pressure (Ps(t)) in the sense of subtraction so that a time-dependent differential course of pressure Δ P(t) is produced and compared with the predefined variance (±Pv).

3. The method according to claim 1 or 2, **characterised in that** the variance (±Pv) is a time-independent limit value.

4. The method according to any one of claims 1 to 3, **characterised in that** the reference course of pressure (Ps(t)) is derived from a time-dependent initial course of pressure and/or represents an averaging of different actual courses of pressure (Pr(t)) from the past.,

5. The method according to any one of claims 1 to 4, **characterised in that** in addition to the pressure (Pt(t)), Ps(t)), other parameters, such as, for example, the temperature of the medium, its flow, type and concentration of the medium, vibrations of the pressurised pipeline (1, 2) etc are monitored and processed in the evaluation unit (6).

6. The method according to any one of claims 1 to 5, **characterised in that** all the recorded parameters and values derived thereform are converted by way of process visualisation into moving graphics, bar charts, displays etc.

7. The method according to any one of claims 1 to 6, **characterised in that** all or selected parameters are recorded in a time-dependent manner.

8. A function monitoring device for supply pipelines (1, 2) of a unite powered by a pressurised medium, more particularly for pressurised pipelines (1, 2) for canying out the process in accordance with any one of claims 1 to 7, with two measurement recorders (4, 5) in the inlet (1) and two measurement recorders (4, 5) in the outlet of the pressurised pipeline to and from the unit (3) with associated two connections (A, B) and with an evaluation unit (6) for processing data supplied by the relevant measurement recorders (4, 5), whereby
- the two measurement recorders (4, 5) are designed for different pressure ranges, namely as a starting pressure measurement recorder (4) for recording the starting pressure and as an operating pressure measurement recorder (5) for recording the operating pressure,
- the evaluation device (6) has a time element (7) for recording time-dependent courses of pressure (Pr(t), Ps(t))
- a differential element (8) is also provided which correlates the determined actual course of pressure (Pr(t)) to the nominal course of pressure (Ps(t) and whereby
- at least one holding valve (13) is provided which at a pressure lower than the starting pressure is closed and only opens above it.

9. The function monitoring device according to claim 8, **characterised in that** a screen (9) is arranged downstream of the starting pressure measurement recorder (4) in order to reduce the pressure.

10. The function monitoring device according to claim 8 or 9, **characterised in that** the holding valve (13) is designed as a pair of opposite acting check valves which is set to open at a predetermined pressure.

11. The function monitoring device according to any one of claims 8 to 10, **characterised in that** in addition to the measurement recorders (4, 5) further sensors, for example temperature sensors (15), flowmeter, analysis/concentration sensor, acceleration sensor etc are provided.

12. The function monitoring device according to any one of claims 8 to 11, **characterised in that** all the components (4, 5, 9, 10, 11, 13, 15) are integrated into a block-like casing.

## Revendications

1. Procédé pour la surveillance du fonctionnement de conduites d'alimentation (1, 2) pour des appareils (3) actionnés par un fluide sous pression, en particulier pour la surveillance des fuites de conduites sous pression (1, 2), avec à chaque fois deux transducteurs (4, 5) sur l'arrivée (1) et deux transducteurs (4, 5) sur le départ (2) de la conduite sous pression (1, 2), respectivement menant à l'appareil (3) et partant de l'appareil (3), avec deux raccords (A, B) associés, et avec un dispositif d'exploitation (6),
- les deux transducteurs (4, 5) étant dimensionnés pour des plages de pression différentes, et étant configurés en tant que transducteur de pression de précharge (4) pour l'acquisition d'une pression de précharge et en tant que transducteur de pression de service (5) pour l'acquisition d'une pression de service,
- chaque transducteur respectif (4, 5) acquérant, en fonction du temps, la pression de service du fluide régnant dans la conduite (1, 2) lors du fonctionnement de l'appareil (3) et transmettant celle-ci au dispositif d'exploitation (6),
- le dispositif d'exploitation (6) vérifiant cette variation de pression réelle (P_{I}(t)) par rapport à une variation de pression de référence (P_{S}(t)) mémorisée dans celui-ci et faisant office de consigne de variation de pression afin de détecter des déviations et de vérifier si ces déviations excèdent une variance (±P_{V}) imposée, et
- la pression de précharge étant en outre déterminée pendant les pauses de fonctionnement de l'appareil (3), et celle-ci étant soumise à un contrôle indépendant du temps sous la forme d'une comparaison valeur réelle/valeur de consigne.

2. Procédé selon la revendication 1, **caractérisé en ce que** la variation de pression réelle (P_{I}(t)) est comparée point par point avec la consigne de variation de pression (P_{S}(t)) dans le but de former une différence, afin de former ainsi une variation de pression différentielle en fonction du temps ΔP (t) qui est comparée à la variance imposée (±P_{V}).

3. Procédé selon la revendication 1 ou 2, **caractérisé en ce que** la variance (±P_{V}) constitue une valeur limite indépendante du temps.

4. Procédé selon l'une des revendications 1 à 3, **caractérisé en ce que** la variation de pression de référence (Pₛ(t)) est dérivée d'une première variation de pression en fonction du temps et/ou représente une moyenne de différentes variations de pression réelles (P_{I}(t)) déterminées précédemment.

5. Procédé selon l'une des revendications 1 à 4, **caractérisé en ce qu'**en plus de la pression (P_{I}(t), P_{S}(t)), d'autres paramètres, comme par exemple la température du fluide, son débit, le type et la concentration du fluide, les vibrations de la conduite sous pression (1, 2), etc., sont surveillés et sont retraités dans le dispositif d'exploitation (6).

6. Procédé selon l'une des revendications 1 à 5, **caractérisé en ce que** tous les paramètres acquis, ainsi que les grandeurs qui en sont dérivées, sont convertis en graphiques animés, en diagrammes à barres, en affichages, dans le but de visualiser le procédé.

7. Procédé selon l'une des revendications 1 à 6, **caractérisé en ce que** tous les paramètres ou des paramètres sélectionnés sont enregistrés en fonction du temps dans un compte-rendu.

8. Dispositif pour la surveillance du fonctionnement de conduites d'alimentation (1, 2) d'un appareil actionné par un fluide sous pression, en particulier pour des conduites sous pression (1, 2), pour la réalisation du procédé selon l'une des revendications 1 à 7, avec à chaque fois deux transducteurs (4, 5) sur l'arrivée (1) et deux transducteurs (4, 5) sur le départ (2) de la conduite sous pression (1, 2), respectivement menant à l'appareil (3) et partant de l'appareil (3), avec deux raccords (A, B) associés, et avec un dispositif d'exploitation (6) pour le retraitement des données fournies par les transducteurs (4, 5) respectifs,
- les deux transducteurs (4, 5) étant dimensionnés pour des plages de pression différentes, et étant configurés en tant que transducteur de pression de précharge (4) pour l'acquisition de la pression de précharge et en tant que transducteur de pression de service (5) pour l'acquisition de la pression de service,
- le dispositif d'exploitation (6) étant pourvu d'un élément de temporisation (7) pour l'acquisition des variations de pression (P_{I}(t), P_{S}(t)) en fonction du temps,
- un élément différentiel (8) étant en outre prévu, qui positionne la variation de pression réelle (P_{I}(t)) par rapport à la consigne de variation de pression (P_{S}(t)), et
- au moins une soupape d'arrêt (13) étant prévue, qui est fermée pour une pression inférieure à la pression de précharge et qui ne s'ouvre que pour une pression supérieure à la pression de précharge.

9. Dispositif pour la surveillance du fonctionnement selon la revendication 8, **caractérisé en ce qu'**un obturateur (9) est disposé avant le transducteur de pression de précharge (4) pour réduire la pression.

10. Dispositif pour la surveillance du fonctionnement selon la revendication 8 ou 9, **caractérisé en ce que** la soupape d'arrêt est réalisée sous la forme d'une paire de clapets antiretour agissant dans des directions opposées l'un par rapport à l'autre, dont l'ouverture est réglée à une pression prédéterminée.

11. Dispositif pour la surveillance du fonctionnement selon l'une des revendications 8 à 10, **caractérisé en ce que**, en plus du transducteur (4, 5), d'autres capteurs, par exemple des sondes de température (15) des débitmètres, des sondes d'analyse/de concentration, des accéléromètres, etc., sont prévus.

12. Dispositif pour la surveillance du fonctionnement selon l'une des revendications 8 à 11, **caractérisé en ce que** tous les composants (4, 5, 9, 10, 11, 13, 15) sont intégrés dans un boîtier en forme de bloc.
